# EUROPEAN PATENT SPECIFICATION

(11) **EP 3 707 960 B1**
(45) Date of publication and mention of the grant of the patent: **05.01.2022**
(21) Application number: 18812273.3
(22) Date of filing: 09.11.2018
(51) Int. Cl.: H05B 6/12

(54) **INDUCTION HEATER FOR A COOK TOP**
INDUKTIONSHEIZUNG FÜR EINE KOCHFLÄCHE
CHAUFFAGE A INDUCTION POUR UNE SURFACE DE CUISSON

(30) Priority: 10.11.2017 IT 201700128458
(43) Date of publication of application: 16.09.2020
(73) Proprietor: I.R.C.A. S.p.A. Industria Resistenze Corazzate e Affini, 31029 Vittorio Veneto (IT)
(72) Inventor: DE MOLINER, Antonio, 31046 Oderzo (IT); DUGHIERO, Fabrizio, 35139 Padova (IT); GIUSTO, Francesco, 30171 Mestre (IT); ZERBETTO, Marcello, 35131 Padova (IT); ZOPPAS, Federico, 31100 Treviso (IT)
(74) Representative: Celona, Antonio
(86) International application number: PCT/IB2018/058830
(87) International publication number: WO 2019/092652

(56) References cited:
- EP-A1- 2 950 613
- EP-A1- 3 139 702
- CN-U- 206 410 178
- FR-A1- 2 971 909

## Description

### Field of the invention

The present invention relates to an induction heater for a cook top, e.g. the cook top of a kitchen, to a method for making such induction heater, and to a cook top comprising such induction heater.

### Background art

Induction cook top make it possible to heat saucepans with ferromagnetic bottom and are increasingly more used.

An induction cook top comprises a given number of inductors fixed to a supporting structure.

In a first type of cook top, the arrangement and the number of the inductors is such that each inductor corresponds to a specific position in which a saucepan must be positioned, substantially as on gas stoves. In other words, each saucepan must be positioned above a respective inductor.

Recently, alternative solutions are being developed, in which the saucepan can be positioned freely in any area of the cook top. In this second type, the dimensions of the cook top being the same, the number of inductors is greater and the radial dimension of each inductor is smaller. By means of an appropriate electronic controller, the inductors can be activated independently from one another and automatically as a function of the position of the saucepan.

This second type of cook top opens a scenario which poses new technological challenges to manufacturers. In particular, the optimization of the geometric parameters of the inductors and their arrangement is not trivial and is of crucial importance.

In particular, adequate power must be guaranteed for any position of the saucepan.

Furthermore, for any position of the saucepan, the modulation of the power applied by the user must be gradual avoiding undesired peaks.

These problems are even more emphasized when one attempts to reduce the size of the cook top components.

Indeed, a further drawback of the induction cook tops, of the first and of the second type alike, resides in the large overall dimensions and weight of their components, in particular of the inductors and of the structure to which they are fixed.

In particular, it is desirable to be able to reduce the size of the inductors and of their support structure.

However, in attempting to obtain this result, one must take into account that on one hand, the inductors with reduced thickness must guarantee a high power, while on the other hand greater overheating problems arise because the heat is concentrated in a smaller thickness. These aspects pose a serious limit to the actual development and use of thin components.

Another drawback of the components for induction cook tops resides in the electrical coupling between the inductors and the power module used to power them. The electrical connections which are used envisage the use of connecting wires. Therefore, during the step of assembly, the intervention of an operator who must manually establish these connections is necessary. Additionally, when attempting to reduce the thickness of the components, the space for making these connections is very small and therefore the operation is particularly difficult. EP3139702A1 discloses an induction coil assembly for an induction cooking hob. Such induction coil assembly comprises at least one coil winding, at least one lower electrically isolating sheet and optionally at least one thermally insulating sheet.

CN206410178U discloses another example of an induction coil assembly for an induction cooking hob.

### Summary of the invention

It is an object of the present invention to provide an induction heater for a cook top which is thin and which at the same time can be manufactured in automated manner.

It is another object of the present invention to provide an induction heater for a cook top which is thin and which at the same time makes it possible to obtain an efficient heat dissipation, in particular of the heat developed on one or more inductors.

It is another object of the present invention to provide an induction heater for a cook top which is thin and which at the same time can provide adequate power to a saucepan to be heated.

The present invention achieves at least one of such objects, and the other objects which will be apparent in light of the present description, by means of an induction heater for a cook top comprising:
- a first electrically insulating sheet;
- a second electrically insulating sheet;
- one or more of inductors, e.g. a plurality of inductors, arranged on the same plane between the first sheet and the second sheet defining a sandwich structure, each inductor comprising a single track of electrically conductive material defining a flat spiral coil, said one or more inductors being provided with at least two terminals;
- an electronic power module provided with a plurality of electrically conductive columns, each column being arranged at a respective terminal;
- electrically conductive electrical connection and fixing means, inserted in a respective column to electrically connect each column to a respective terminal and to fix said sandwich structure to said electronic power module;

preferably, wherein the second sheet has a plurality of holes, of which each hole is coaxial with a respective column; each hole is crossed by a respective electrical connection and fixing means; and each of the electrical connection and fixing means is in contact, preferably directly in contact, or more in general in electrical contact, with a respective terminal.

Preferably, each column is located under a respective terminal.

Preferably, said electrical connection and fixing means either comprise or are a plurality of screws or rivets or pins, and are preferably different from electrical connection wires.

Preferably, the electrical connection and fixing means are rigid, in particular inflexible.

Each of the electrical connection and fixing means defines an axis, which is preferably the longitudinal, preferably rectilinear axis of the respective electrical connection and fixing means.

Each column defines an axis, which is preferably the longitudinal, preferably rectilinear axis each of each column. In particular, each column comprises a housing for a respective electrical connection and fixing means. The axis of each housing, preferably the longitudinal axis of each housing, is coaxial with the axis, preferably the longitudinal axis, of the respective column.

Preferably, the electrical connection and fixing means are inserted coaxially in a respective column.

For example, the electrical connection and fixing means are inserted in the respective column so that an axis, preferably the longitudinal axis, of each of the electrical connection and fixing means is coaxial, in particular coincident with an axis, preferably the longitudinal axis, of the respective column, in particular of the respective housing of the column.

Preferably, each of said axes, preferably longitudinal axes, of the electrical connection and fixing means and of the columns is parallel to the axes X about which the turns of each inductor are wound (or to axis X if a single inductor is provided).

According to an aspect, the invention comprises a method for making such an induction heater, comprising at least the steps of:
- preparing a sandwich structure formed by the first sheet, by the second sheet and by the one or more inductors, e.g. by a plurality of inductors, arranged between the first sheet and the second sheet;
- arranging the sandwich structure so as to align each column of the electronic power module with a respective terminal of said one or more inductors, e.g. of the plurality of inductors;
- electrically connecting each column to a respective terminal and fixing said sandwich structure to said electronic power module by means of said electrical connection and fixing means.

According to another aspect, the invention further comprises a cook top having an upper surface destined to be a supporting surface for at least one saucepan to be heated, comprising at least one heater as defined above.

Advantageously, an induction heater is provided wherein the electrical connection between the inductors and an electronic power module is made without connecting wires, so that the assembly of the heater is easier and more automated.

Advantageously, according to a further aspect, by means of a metal plate, the heat produced by the inductors is dissipated effectively. In particular, it is dissipated the heat which is generated on inductors due to the passage of current by Joule effect. Also, preferably, there is no need for additional ventilation means, e.g. fans, for dispersing heat or it is possible to reduce the use of such ventilation means. Advantageously, according to another aspect, the geometric parameters of the inductors are carefully selected so as to provide adequate power while being very thin. Additionally, adequate power is guaranteed even when a saucepan is not perfectly at a single inductor.

Further features and advantages of the present invention will be more apparent in light of the detailed description of preferred, but not exclusive embodiments.

The dependent claims describe particular embodiments of the invention.

### Brief description of the figures

The description of the invention refers to the accompanying drawings, which are provided by way of non-limiting example, in which:
Fig. 1 diagrammatically shows an exploded view of a heater according to the invention;
Fig. 2 diagrammatically shows a section of a part of the heater in Fig.1;
Fig. 3 diagrammatically shows a detail of Fig. 2;
Figs. 3A and 3B diagrammatically show two possible variants of the section of the turns of an inductor;
Fig. 4 shows a top plan view of some components of the induction heater in Fig. 1;
Fig. 5 shows a detail of Fig. 4;
Fig. 6 shows a top plan view of a component of the induction heater in Fig. 1, wherein the inductors are not shown for the sake of description;
Fig. 7 shows a top plan view of an example of inductor of the induction heater in Fig. 1;
Fig. 8 shows a diagrammatic top view of the component in Fig. 7;
Fig. 9 shows a top plan view of a part of the induction heater in Fig. 1;
Fig. 10 diagrammatically shows a top plan view of a cook top according to the invention.

The same elements, or elements which have the same function, have the same reference number.

### Description of example embodiments of the invention

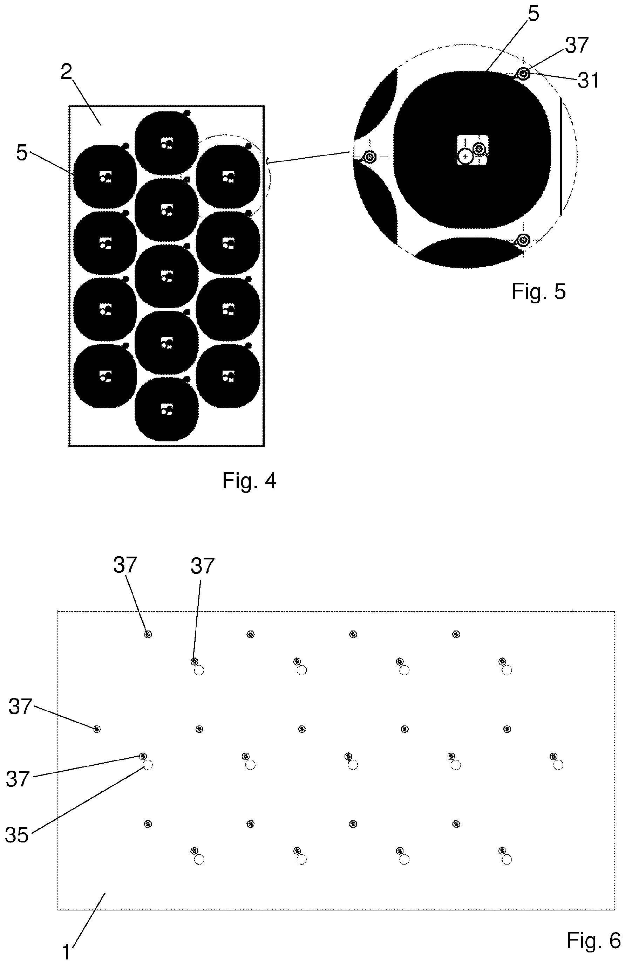

According to an embodiment, the induction heater, or induction heating element, for a cook top comprises:
- a first electrically insulating sheet 1 ;
- a second electrically insulating sheet 2;
- a plurality of inductors 5 arranged on the same plane between the first sheet 1 and the second sheet 2 defining a sandwich structure, each inductor 5 comprising a single track of electrically conductive material defining a flat spiral coil, said plurality of inductors 5 being provided with at least two terminals 31, 32;
- an electronic power module 6 provided with a plurality of electrically conductive columns 7, each column 7 being arranged at a respective terminal 31, 32;
- electrically conductive electrical connection and fixing means 37 (Fig. 5, 6 and 9), inserted coaxially in a respective column 7 to electrically connect each column 7 to a respective terminal 31, 32 and to fix said sandwich structure to said electronic power module 6.

Preferably, the sheet 2 is proximal to the electronic power module 6, and therefore proximal to the columns 7, and the sheet 1 is distal from the electronic power module 6, and therefore distal from the columns 7.

Optionally, a metal plate or foil 3 is provided arranged under the sheet 2, in particular between the sheet 2 and the electronic board 8 of the electronic power module 6.

The sheet 1, the sheet 2, the inductors 5 and the metal plate 3 (the latter, when provided) are much thinner than they are wide and long.

Preferably, the induction heater further comprises at least one magnetic flux concentrator 4 arranged between the second sheet 2 and the electronic board 8.

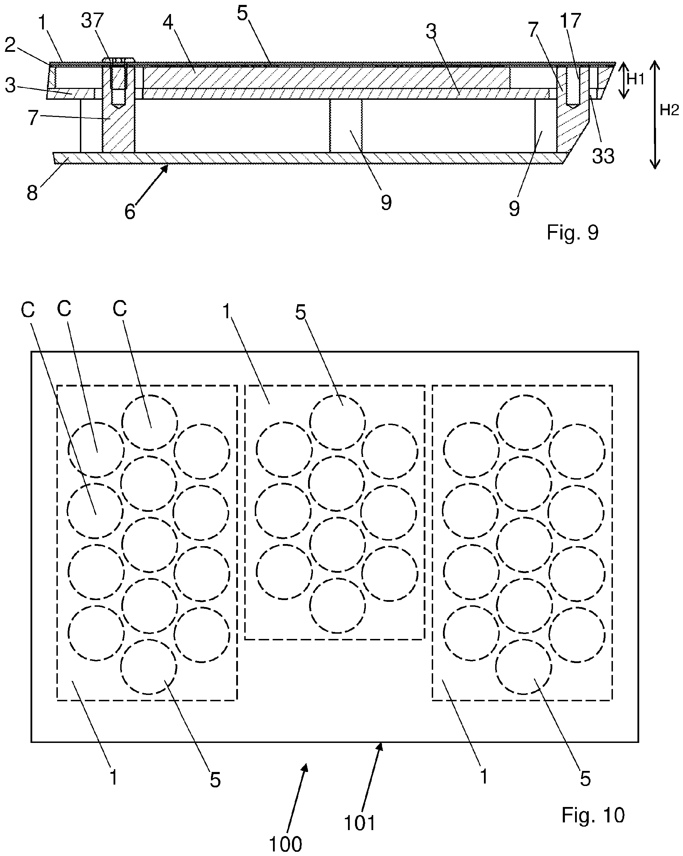

Preferably, the total thickness H1 (Fig. 9) of the first sheet 1, of each inductor 5, of the second sheet 2, of at least one magnetic flux concentrator 4 and of the metal plate 3 is comprised between 4 and 12 mm, e.g. either less than or equal to 9.5 mm.

The inductors 5 are substantially incorporated between the sheet 1 and the sheet 2, so as to form a sandwich structure. The inductors 5 have an upper side which adheres to the sheet 1 and a lower side which adheres to the sheet 2. Such adhesion can be implemented, for example, by means of a bi-adhesive layer or by means of glue.

Preferably, the sheet 1 and the sheet 2 are flexible so that, at least in some areas, the sheet 1 and the sheet 2 also adhere to each other. In particular, it is preferable for the sheet 1 and the sheet 2 to adhere at least partially to each other in the gaps which are present between the inductors 5. Furthermore, preferably, the peripheral edges of the sheet 1 and sheet 2 adhere to one another.

Preferably, the sheet 1 is made of mica. Preferably, the sheet 1 is less than 1000 µm thick. In a particularly preferable manner, the thickness of the sheet 1 is less than 500 µm, more preferably is comprised between 100 and 400 µm.

Preferably, the sheet 2 is made of polymeric material. For example, the sheet 2 can be made of an elastomeric material, such as a type of silicone, or polyamide (PI), in particular Kapton^{®}, or a material containing aramid fibers, in particular Nomex^{®}.

Preferably, the sheet 2 is less than 1000 µm thick. In a particularly preferable manner, the thickness of the sheet 2 is less than 500 µm, more preferably is comprised between 25 and 100 µm.

The sheet 1 and the sheet 2 may also be made of the same material and, in this case, may optionally have the same thickness. For example, the sheet 1 and the sheet 2 may be both made of mica, and preferably have a thickness of less than 500 µm, more preferably comprised between 100 and 400 µm; alternatively, the sheet 1 and the sheet 2 may both be made of polymeric material, e.g. one of the materials mentioned above, and preferably have a thickness of less than 500 µm, more preferably between 25 and 100 µm.

Optionally, the sheet 1 and/or the sheet 2 have a compact, i.e. non-porous structure or microstructure.

Each inductor 5 is typically made of a metal material, e.g. copper or aluminum, preferably copper, or may be made by means of conductive ink or conductive paste.

Preferably, each inductor 5 is made by etching, in particular chemical etching, of a metal element, e.g. a sheet or foil, preferably of copper or aluminum.

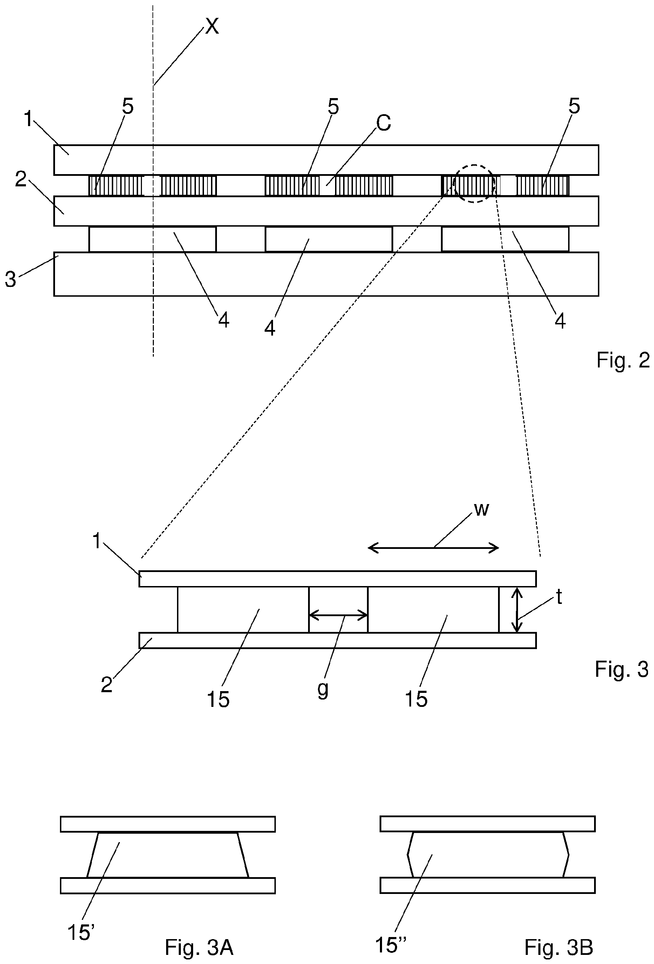

Preferably, each inductor 5 has a thickness comprised between 100 and 500 µm, or between 200 and 400 µm, or between 250 and 400 µm, or between 250 and 450 µm, or between 250 and 390 µm, or between 250 and 350 µm, or between 280 and 350 µm. In Fig. 3, the thickness of each inductor 5, in particular of each of its turns 15 or equivalently of the conductive track, is indicated by reference "t" (Fig. 3).

Each inductor 5 defines a respective axis X about which the turns 15 are wound. In particular, such an axis X passes through the barycenter C of each inductor 5. The thickness t of each inductor 5 is a length which extends parallel to the axis X. The turns 15 form a single electrically conductive track, different from a Litz wire. The track is preferably formed by a single layer. Preferably, such track is structurally homogeneous, in particular along its thickness, i.e. is without discontinuities.

Preferably, the distance "g" (Fig. 3) between each turn 15 and the next, i.e. the adjacent or consecutive turn, is comprised between 150 and 1500 µm; more preferably between 250 and 500 µm; even more preferably between 300 and 400 µm. Such distance g is either perpendicular or substantially perpendicular to the thickness t.

Preferably, the distance g between the consecutive turns, e.g. between two adjacent (i.e. consecutive) turns, is equal or substantially equal for all the turns 15, i.e. remains constant or substantially constant.

Preferably, the ratio g/t is comprised between 0.5 and 3, or between 0.5 and 1.5, or between 0.5 and 1, or between 1 and 1.5, the extreme values being preferably included. In a particularly preferred way, the ratio g/t is either less than or equal to 1.5, more preferably is comprised between 0.5 and 1.5. For example, the ratio g/t may be equal to or approximately equal to 0.5; or to 0.6; or to 0.7; or to 0.8; or to 0.9; or to 1 or 1.1; or 1.2; or 1.3; or 1.4; or 1.5.

Preferably, the width w of each turn 15 is comprised between 100 and 1000 µm, more preferably between 200 and 700 µm, even more preferably 400 and 600 µm. Preferably, the width w is equal for all the turns 15, i.e. remains constant. This width w is considered perpendicularly to the thickness t.

Preferably, the pitch of the turns, i.e. the distance between corresponding points of each turn and the adjacent, i.e. the immediately subsequent, one is comprised between 250 and 2500 µm, preferably between 600 and 1000 µm.

The number of turns 15 of each inductor 5 is preferably comprised between twenty-five and seventy-five, more preferably between thirty and seventy, even more preferably between thirty-five and fifty.

The turns 15 preferably have a rectangular or substantially rectangular section, as shown in Fig. 3. However, in particular when the inductors 5 are made by means of chemical etching, due to process inaccuracies, the section of the turns may not be perfectly rectangular. In particular, the section of the turns may be trapezoidal with sides inclined with respect to the bases. The sides may have the same or mutually different inclination, as diagrammatically shown in Fig. 3A and 3B, which show two possible cross sections of the turns 15', 15".

Preferably, the possible trapezoidal shape of the section of the turns, does not substantially alter the distance g between the turns and the width w of the turns, which are two quantities which remain substantially constant.

Preferably, each inductor 5 is configured to provide a maximum power of between 300 and 1000 W. Preferably, such maximum power is the power which is supplied to the cook top, in particular at its upper surface.

The number of inductors 5 is variable, preferably from two to twenty-five or from four to sixteen. Preferably, the number of inductors 5 is: at least two, or at least three or at least four, or at least five, or at least six, or at least seven or at least eight. Alternatively, only one inductor 5 may also be provided.

Preferably, the inductors 5 are all identical or substantially identical to one another.

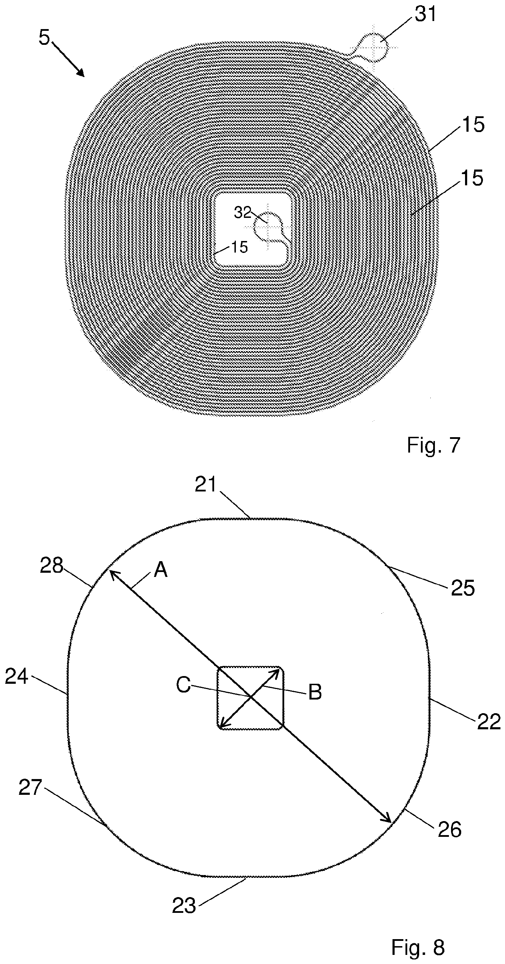

Fig. 7 shows a top plan view of an example of inductor 5; In Fig. 8, the outermost turn and the innermost turn of the inductor 5 are diagrammatically shown for the sake of description.

Preferably, each inductor 5 has a maximum dimension comprised between 30 and 240 mm, more preferably between 65 and 130 mm, even more preferably between 80 and 120 mm, e.g. about 80 mm or about 120 mm. In particular, the aforesaid maximum dimension corresponds to the length of the diameter of the circumscribed circumference of the outermost turn 15, this diameter being indicated by reference "A" in Fig. 8.

Preferably, the length of the diameter of the circumscribed circumference of the innermost turn is comprised between 10 and 50 mm, more preferably between 15 and 30 mm, e.g. about 18 mm, such diameter being indicated by reference "B" in Figure 8.

Preferably, the inductors 5 are shaped so that each turn 15 has four straight stretches 21, 22, 23, 24 mutually parallel in pairs, and four curved stretches 25, 26, 27, 28. Two mutually successive rectilinear stretches are joined by a respective curved stretch. Optionally, only the innermost turn and the outermost turn have one or more fewer rectilinear stretches and/or one or more fewer curvilinear stretches than the other turns.

Preferably, the radius of curvature of the curved stretches 25, 26, 27, 28 gradually increases, preferably linearly, from the innermost turn to the outermost turn. Preferably, between one turn and the next, the radius of curvature increases by a value equal to the distance g+w (Fig. 3), i.e. a value equal to the pitch between the turns. Preferably, the curved stretches of each turn have a radius of curvature either equal or substantially equal to each other. Preferably, the radius of curvature of the curved stretches of the innermost turn is comprised between 0.5 and 5 mm, and the radius of curvature of the curved stretch of the outermost turn is comprised between 20 and 60 mm.

Alternatively, it is however possible to provide one or more inductors in which the radius of curvature of the curved stretches is substantially the same for all turns, e.g. with a value selected in the range from 5 to 10 mm.

It has been experimentally observed that if the radius of curvature increases gradually from the inside outwards, the efficiency of the inductor is greater than the case in which the radius of curvature remains constant for all turns. In particular, a reduction in the power dissipated on the inductors of 20-25% has been observed.

In another alternative, each turn is substantially circular.

Each inductor 5 has two terminals 31, 32, (Fig. 7) or pads, which are used for their electrical power supply. Preferably, the two terminals 31, 32 are arranged between the sheet 1 and the sheet 2, in particular between a plane defined by the sheet 1 and a plane defined between the sheet 2. Preferably, the two terminals 31, 32 are arranged completely between the sheet 1 and the sheet 2, in particular the two terminals 31, 32 are arranged completely between a plane defined by the sheet 1 and a plane defined between the sheet 2. Preferably, a terminal 31 extends from the outermost turn towards the outside of the inductor 5, and the other terminal 32 extends from the innermost turn towards the inside of the inductor 5. Preferably, the terminals 31, 32 have substantially the shape of an eyelet or ring. Alternatively, it can be provided that the inductors are connected to one another and only two terminals are provided in common for all the inductors or each inductor has only one terminal which is provided in common for all the inductors. In these two cases, by way of example only, the inductors may be made by means of a single conductive track, shaped so as to have portions spirally wound to form inductors, and connecting portions between the inductors.

Preferably, the minimum distance between two adjacent, i.e. consecutive, inductors 5 is comprised between 4 mm and 20 mm, more preferably between 5 and 10 mm, e.g. about 5 mm.

Preferably, the inductors 5 are distributed so that the saucepan to be heated (not shown) can be positioned substantially freely on the cook top. In other words, the bottom of the saucepan can be arranged above a portion of multiple inductors, e.g. above only a respective portion of four inductors.

Preferably, the inductors 5 are arranged according to a grid, more preferably according to a honeycomb grid. For example, the barycenters C of the inductors 5 of a first row are offset with respect to the barycenters C of the inductors 5 of a second row, immediately successive (i.e. consecutive) to the first row, and aligned with the barycenters of the inductors 5 of a third row consecutive to the second row. Preferably, three rows of inductors 5 are provided.

Preferably, the induction heater comprises at least one magnetic flux concentrator 4 arranged between the sheet 2 and the metal plate 3, for each inductor 5. In particular, each magnetic flux concentrator 4 is preferably coaxial to the respective inductor 5. In particular, the barycenter of each magnetic flux concentrator 4 is preferably aligned along the axis X with the barycenter of a respective inductor 5.

Preferably, the magnetic flux concentrators 4 are identical or substantially identical to each other.

Each magnetic flux concentrator 4 is preferably made of ferrite and preferably has a plan geometry and dimensions substantially similar to those of the respective inductor 5. In particular, each magnetic flux concentrator 4 has an outer contour having four straight stretches mutually parallel in pairs, and four curved stretches. Two mutually successive rectilinear stretches are joined by a respective curved stretch. Furthermore, each magnetic flux concentrator 4 preferably has a central hole delimited by a wall having the same shape but smaller size with respect to the aforesaid outer contour.

Alternatively, a single magnetic flux concentrator may be provided made as a single layer, preferably either made of ferrite or containing ferrite, e.g. silicone containing ferrite particles. In a further alternative, it is possible to use a plurality of magnetic flux concentrators, e.g. shaped as ferrite bars, preferably substantially parallelepiped-shaped.

In any case, preferably, the at least one magnetic flux concentrator 4 has a thickness comprised between 2 and 4 mm, e.g. about 3 mm.

Advantageously, the metal plate 3 is provided below the magnetic flux concentrators 4. Preferably, the metal plate 3 has a thermal conductivity greater than 100 W·m⁻¹·K⁻¹. Preferably, the metal plate 3 is made of aluminum or an alloy containing aluminum.

The metal plate 3 has a width and a length substantially equal to that of the sheet 1 and sheet 2. The thickness of the metal sheet 3 is preferably comprised between 0.5 mm and 3 mm, even more preferably from 1 to 2 mm.

Preferably, the magnetic flux concentrators 4 rest on the metal plate 3. Preferably, the magnetic flux concentrators 4 each have an upper face adjacent to the sheet 2 and a lower face adjacent to the metal plate 3.

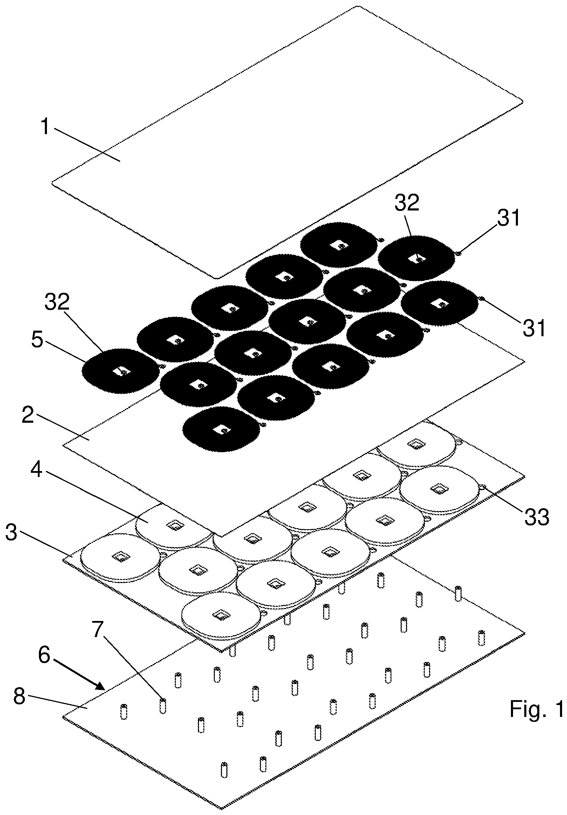

As mentioned above, the induction heater also comprises the electronic power module 6, shown in particular in Fig. 1 and 9. The electronic power module 6 comprises a plurality of columns 7, or connectors, which are used to electrically supply the inductors 5. The columns 7 are made of electrically conductive material, preferably metal, e.g. brass.

The columns 7 rise vertically, in particular parallel to the axes X, from the electronic board 8, which substantially acts as a base plate, of the electronic power module 6. One column is provided for each terminal. In particular, when each inductor 5 has two terminals 31, 32, two columns 7 are provided for each inductor 5. Each column 7 is connected to a respective terminal 31, 32 of each inductor 5 by means of electrical connection and fixing means 37, i.e. which have the dual function of forming an electrical connection and fixing at the same time. Preferably, the sheet 2, which is proximal to the electronic power module 6, has a plurality of holes, of which each hole is coaxial with a respective column 7; each hole is crossed by a respective electrical connection and fixing means 37; and each of the electrical connection and fixing means 37 is in contact, preferably directly in contact or more in general in electrical contact, with a respective terminal 31, 32. Although possible, it is not necessary for the sheet 1 to be also provided with holes crossed by the electrical connection and fixing means 37. Preferably, such electrical connection and fixing means either are or comprise screws 37. The screws 37, and more generally the electrical connection and fixing means, are made of electrically conductive material, preferably in metal, e.g. stainless steel or brass.

In particular, the columns 7 pass through the metal plate 3 (when provided) and have an upper edge in contact, preferably in direct contact, with the lower surface of the sheet 2 and/or with the lower surface of the terminal 31, 32 according to the dimensions of the holes of the sheet 2. Said lower surfaces are proximal to the electronic power module 6. The metal plate 3 is provided with a plurality of holes 33 (Fig. 1 and 9), wherein each hole 33 is coaxial with a respective column 7. Each column 7 is internally provided with a threaded housing 17 for a respective screw 37.

The screws 37 pass through the sheet 1 and the sheet 2. Indeed, both the sheet 1 and the sheet 2 have a plurality of holes, wherein each hole is coaxial with a respective hole 33, and therefore with a respective column 7. Each screw 37 is fastened into a respective column 7. Each screw 37 is in contact with a respective terminal 31, 32 of each inductor 5. Preferably, the head of each screw 37 is in contact, preferably in direct contact, with a respective terminal 31, 32, in particular with its upper surface, which is the surface distal from the electronic board 8, or with its lower surface. In such manner, the electronic power module 6 may supply the inductors 5. Indeed, the electrical current passes through the columns 7 and the screws 37 to reach the terminals 31, 32. Alternatively, it may be provided that the upper edge of each column is in contact with a respective terminal 31, 32, while the head of the screw is in contact with the sheet 1; and/or that the upper edge of each column 7 and the head of each screw 37 are both in direct contact, or more in general in electrical contact with the respective terminal 31, 32. Alternatively to the screws 37, rivets or pins (not shown) may be provided. In this case, the walls of the housings of the columns are substantially smooth, i.e. not threaded. Furthermore, each rivet or each pin passes vertically through the whole respective column and the electronic board 8. When rivets are provided, the head of each rivet preferably abuts with the lower surface of the electronic board 8, while the counterhead preferably abuts with the sheet 1 and/or with a respective terminal 31, 32, or vice versa. In particular, in this case, the lower surface of the electronic board 8 is appropriately electrically isolated from the head of the rivet, e.g. by means (not shown) made of electrically insulating material arranged between the head of the rivet and the lower surface of the electronic board 8. When pins are provided instead, brazing is used for fixing to the sheet 1 and to the electronic board 8.

Advantageously, by providing the electrical connection and fixing means 37 and the columns 7, the electrical connection between the inductors 5 and the electronic power module 6 is made without the use of supply wires. However, it is worth noting that as an alternative it is also possible to provide connections between the inductors and electronic power module which envisage wires.

The columns 7, which are preferably all mutually equal, have a height preferably comprised between 10 and 20 mm, more preferably between 12 and 18 mm.

The metal plate 3 and the electronic board 8 of the electronic power module 6 are spaced apart from each other. In particular, the lower surface of the metal plate 3 is spaced from the upper surface of the electronic board 8. Preferably, between the lower surface of the metal plate 3 and the upper surface of the electronic board 8 an empty gap is provided.

Advantageously, the total thickness H2 (Fig. 9) of the induction heater, comprising the electronic power module 6, is comprised between 14 and 26, more preferably between 16 and 22, e.g. about 20 mm. In particular, such overall thickness H2 is the thickness of the structure formed by sheet 1, sheet 2, inductors 5, magnetic flux concentrators 4, metal plate 3 and electronic power module 6. In more detail, this total thickness H2 is the distance between the upper surface of the sheet 1 and the lower surface of the electronic power module 6, in particular of the lower surface of the electronic board 8 of the electronic power module 6.

Preferably, the metal plate 3 is fixed to a plurality of pedestals 9, or spacers, which rise vertically from the electronic board 8. Preferably, such pedestals 9 are distinct or different from the columns 7. The fixing can be achieved, e.g. by means of screws, e.g. in similar manner to the fixing between the columns 7 and the screws 37.

Preferably, the distance between the metal plate 3 and the inductors 5 is either less than or equal to 5 mm, and preferably is comprised between 2.5 and 4.5 mm. In particular, such distance is the distance, parallel to the axis X, between the upper surface of the metal plate 3 and the barycenter C of an inductor 5, or between the upper surface of the metal plate 3 and the lower surface of an inductor 5. Preferably, such distance is either equal or substantially equal for all the inductors 5.

Preferably, the induction heater also comprises a plurality of temperature sensors 35 (Fig. 6), preferably a temperature sensor 35 for each inductor 5. The temperature sensors 35 are arranged in respective holes of the sheet 1, of the sheet 2 and of the metal plate 3. In particular, each temperature sensor 35 is arranged in the zone of each inductor 5, which is surrounded by the innermost turn 15. Advantageously, the temperature sensors 35 are sensitive to the temperature of the cook top, in particular of its upper surface.

The invention further comprises a method for making an induction heater comprising at least the steps of:
- preparing a sandwich structure formed by the first sheet 1, by the second sheet 2 and by the inductors 5 arranged between the first sheet 1 and the second sheet 2;
- arranging the sandwich structure so as to align each column 7 of the electronic power module 6 with a respective terminal 31, 32 of the plurality of inductors 5;
- electrically connecting each column 7 to a respective terminal 31, 32 and fixing said sandwich structure to said electronic power module 6 by means of said electrical connection and fixing means 37.

The invention further comprises a cook top, e.g. a cook top 100 of a kitchen (Fig. 10).

The cook top 100 has an upper surface 101 destined to be a supporting plane for one or more saucepans to be heated. Preferably, the cook top further comprises a lower surface opposite to the upper surface.

The cook top 100 comprises one or more induction heaters, e.g. an induction heater, or two or three induction heaters. When there are more than one induction heater, the induction heaters are mutually side-by-side and each one is substantially an independent heating module.

Preferably, each module has a width comprised between 23 and 30 cm, such as about 27 cm. Preferably, the length of each module is comprised between 35 and 50 cm, e.g. is equal to or approximately equal to 40 cm or is equal to or approximately equal to 44 cm.

The induction heater or the induction heaters are arranged under the upper surface 101 of the cook top 100. In particular, each induction heater is arranged so that the sheet 1 and the sheet 2 are respectively in a proximal and distal position with respect to the surface 101.

Advantageously, the distance between the barycenter C of each inductor 5 and the lower surface is preferably less than 3 mm. More preferably, such distance is comprised between about 0.025 and 2 mm.

Advantageously, the barycenters C of the inductors can be positioned very close to the upper surface 101, in particular by virtue of the reduced thickness of the heater according to the invention. In particular, the use of very thin inductors, formed by a single track defining a flat spiral coil, is advantageous.

Since the barycenter C of the inductors is very close to the upper surface 101, the modulation of the power of each inductor, operated by a user, can occur gradually, avoiding undesired peaks.

Advantageously, moreover, the heater of the invention is adapted to be mounted in a cook top the upper surface of which is made of glass or in a cook top the upper surface of which is made of a different material from the glass, e.g. in ceramics or wood. In particular, the heater of the invention can be integrated in a housing of a structure the upper surface of which is intended not only to be used as a cook top but also as a work top for other operations, different from cooking, which are performed in a kitchen. In other words, the same area which can be used to place the saucepans for cooking can also be used as work top.

## Claims

1. An induction heater for a cook top comprising:
- a first electrically insulating sheet (1);
- a second electrically insulating sheet (2);
- one or more of inductors (5) arranged on a same plane between the first sheet (1) and the second sheet (2) defining a sandwich structure, each inductor (5) comprising a single track of electrically conductive material defining a flat spiral coil, said one or more inductors (5) being provided with at least two terminals (31, 32);
**characterized in that** the induction heater comprises
- an electronic power module (6) provided with a plurality of electrically conductive columns (7), each column (7) being arranged at a respective terminal (31, 32);
- electrically conductive electrical connection and fixing means (37), inserted in a respective column (7) to electrically connect each column (7) to a respective terminal (31, 32) and to fix said sandwich structure, formed by said one or more inductors (5) arranged on said same plane between the first sheet (1) and the second sheet (2), to said electronic power module (6);
**in that** the second sheet (2), which is proximal to the electronic power module (6), has a plurality of holes, of which each hole is coaxial with a respective column (7); **in that** each hole is crossed by a respective electrical connection and fixing means (37);
and **in that** each of the electrical connection and fixing means (37) is in contact with a respective terminal (31, 32).

2. An induction heater according to claim 1, wherein each inductor (5) is provided with two terminals (31, 32); or wherein, when multiple inductors (5) are provided, said inductors (5) are connected to one another and wherein there are only two terminals in common for all the inductors (5); or wherein, if multiple inductors (5) are provided, said inductors (5) are connected to one another, each inductor (5) has a respective terminal and one terminal is provided in common for all the inductors (5).

3. An induction heater according to claim 1 or 2, wherein the electronic power module (6) comprises an electronic board (8), and wherein said columns (7) extend vertically from the electronic board (8) towards the inductors (5).

4. An induction heater according to claim 3, wherein each column (7) has a height comprised between 10 and 20 mm.

5. An induction heater according to any one of the preceding claims, wherein each column (7) has an upper edge in contact with the lower surface of a respective terminal (31, 32) or with the lower surface of the second sheet (2).

6. An induction heater according to any one of the preceding claims, wherein the first sheet (1) has a plurality of holes, of which each hole is coaxial with a respective column (7), and wherein each hole is crossed by a respective electrical connection and fixing means (37); and/or wherein each of the electrical connection and fixing means (37) is in contact with an upper surface or a lower surface of a respective terminal (31, 32).

7. An induction heater according to any one of the preceding claims, wherein said electrical connection and fixing means comprise screws, and wherein each screw is screwed into a respective housing (17) provided internally to each column (7).

8. An induction heater according to claim 7, wherein each screw has a head in contact with the upper surface of a respective terminal (31, 32).

9. An induction heater according to any one of the claims from 1 to 6, wherein said electrical connection and fixing means (37) are rivets or pins, and wherein each rivet or each pin crosses vertically, and preferably completely, each column (7) and preferably the electronic board (8).

10. An induction heater according to any one of the claims from 3 to 9, comprising
- at least one magnetic flux concentrator (4) arranged under, preferably directly under, the second sheet (2);
- and a heat sink plate (3), made of metal, arranged under, preferably directly under, the at least one magnetic flux concentrator (4), adapted to dissipate the heat produced by the one or more inductors (5), wherein said heat sink plate (3) has a plurality of holes (33), of which each hole is crossed by a respective column (7).

11. An induction heater according to any one of the preceding claims, wherein each turn (15) of a plurality of turns of each inductor (5) is shaped so as to have four rectilinear stretches (21, 22, 23, 24) parallel in pairs, and four curved stretches (25, 26, 27, 28), wherein two mutually successive rectilinear stretches (21, 22, 23, 24) are joined by a respective curved stretch (25, 26, 27, 28) and preferably wherein the radius of curvature of the curved stretch (25, 26, 27, 28) increases gradually, preferably linearly from the innermost turn to the outermost turn.

12. An induction heater according to any one of the preceding claims, wherein said terminals (31, 32) are arranged, preferably completely, between a plane defined by the first sheet (1) and a plane defined by the second sheet (2); and/or wherein the overall thickness (H2) comprised between the lower surface of the electronic power module (6) and the upper surface of the first sheet (1) is between 14 and 26 mm.

13. An induction heater according to any one of the preceding claims, wherein each inductor (5) has a thickness (t) comprised between 100 and 500 µm, preferably between 250 and 390 µm; and preferably wherein the ratio of the distance (g) between the consecutive turns (15) of each inductor (5) and the thickness (t) of each inductor (5) is either smaller than or equal to 1.5; and preferably wherein the thickness of the first sheet (1) is less than 1000 µm and the thickness of the second sheet (2) is less than 1000 µm.

14. A cook top (100) comprising an induction heater according to any one of the preceding claims.

15. A cook top (100) according to claim 14, having an upper surface (101) destined to be a resting surface for at least one saucepan to be heated, and a lower surface opposite to the upper surface, wherein the distance between the barycenter (C) of each inductor (5) and said lower surface is less than 3 mm.

16. A method for making an induction heater according to any one of the claims from 1 to 13, the method comprising at least the steps of:
- preparing a sandwich structure formed by the first sheet (1), by the second sheet (2) and by the one or more inductors (5) arranged on a same plane between the first sheet (1) and the second sheet (2);
- arranging the sandwich structure so as to align each column (7) of the electronic power module (6) with a respective terminal (31, 32) of said one or more inductors (5);
- electrically connecting each column (7) to a respective terminal (31, 32) and fixing said sandwich structure to said electronic power module (6) by means of said electrical connection and fixing means (37).

## Patentansprüche

1. Induktionsheizung für ein Kochfeld, umfassend:
- eine erste elektrisch isolierende Platte (1);
- eine zweite elektrisch isolierende Platte (2);
- einen oder mehrere Induktoren (5), die auf einer gleichen Ebene zwischen der ersten Platte (1) und der zweiten Platte (2) angeordnet sind und eine Sandwichstruktur bilden, wobei jeder Induktor (5) eine einzelne Bahn aus elektrisch leitendem Material umfasst, die eine flache Spiralspule bildet, wobei der eine oder die mehreren Induktoren (5) mit mindestens zwei Anschlüssen (31, 32) versehen sind;
**dadurch gekennzeichnet, dass** die Induktionsheizung umfasst
- ein elektronisches Leistungsmodul (6), das mit einer Vielzahl von elektrisch leitenden Säulen (7) versehen ist, wobei jede Säule (7) an einem jeweiligen Anschluss (31, 32) angeordnet ist;
- elektrisch leitende Mittel (37) zur elektrischen Verbindung und Befestigung, die in eine jeweilige Säule (7) eingefügt sind, um jede Säule (7) mit einem jeweiligen Anschluss (31, 32) elektrisch zu verbinden und die Sandwichstruktur, die durch den einen oder die mehreren Induktoren (5) gebildet wird, die auf derselben Ebene zwischen der ersten Platte (1) und der zweiten Platte (2) angeordnet sind, an dem elektronischen Leistungsmodul (6) zu befestigen;
dass die zweite Platte (2), die sich in der Nähe des elektronischen Leistungsmoduls (6) befindet, eine Vielzahl von Löchern aufweist, von denen jedes Loch koaxial mit einer entsprechenden Säule (7) ist; dass jedes Loch von einem entsprechenden Mittel (37) zur elektrischen Verbindung und Befestigung durchquert wird;
und dass jedes der Mittel (37) zur elektrischen Verbindung und Befestigung in Kontakt mit einem entsprechenden Anschluss (31, 32) steht.

2. Induktionsheizung nach Anspruch 1, wobei jeder Induktor (5) mit zwei Anschlüssen (31, 32) versehen ist; oder wobei, wenn mehrere Induktoren (5) vorgesehen sind, die Induktoren (5) miteinander verbunden sind und wobei es nur zwei gemeinsame Anschlüsse für alle Induktoren (5) gibt; oder wobei, wenn mehrere Induktoren (5) vorgesehen sind, die Induktoren (5) miteinander verbunden sind, jeder Induktor (5) einen jeweiligen Anschluss hat und ein gemeinsamer Anschluss für alle Induktoren (5) vorgesehen ist.

3. Induktionsheizung nach einem der Ansprüche 1 oder 2, wobei das elektronische Leistungsmodul (6) eine elektronische Platine (8) umfasst, und wobei sich die Säulen (7) vertikal von der elektronischen Platine (8) zu den Induktoren (5) hin erstrecken.

4. Induktionsheizung nach Anspruch 3, wobei jede Säule (7) eine Höhe zwischen 10 und 20 mm aufweist.

5. Induktionsheizung nach einem der vorhergehenden Ansprüche, wobei jede Säule (7) einen oberen Rand aufweist, der mit der unteren Fläche eines entsprechenden Anschlusses (31, 32) oder mit der unteren Fläche der zweiten Platte (2) in Kontakt steht.

6. Induktionsheizung nach einem der vorhergehenden Ansprüche, wobei die erste Platte (1) eine Vielzahl von Löchern aufweist, von denen jedes Loch koaxial mit einer jeweiligen Säule (7) ist, und wobei jedes Loch von einem jeweiligen Mittel (37) zur elektrischen Verbindung und Befestigung gekreuzt wird; und/oder wobei jedes der Mittel (37) zur elektrischen Verbindung und Befestigung in Kontakt mit einer oberen Fläche oder einer unteren Fläche eines jeweiligen Anschlusses (31, 32) steht.

7. Induktionsheizung nach einem der vorhergehenden Ansprüche, wobei die Mittel zur elektrischen Verbindung und Befestigung Schrauben umfassen und wobei jede Schraube in ein entsprechendes Gehäuse (17) geschraubt ist, das im Inneren jeder Säule (7) vorgesehen ist.

8. Induktionsheizung nach Anspruch 7, wobei jede Schraube einen Kopf hat, der mit der oberen Fläche eines entsprechenden Anschlusses (31, 32) in Kontakt steht.

9. Induktionsheizung nach einem der Ansprüche 1 bis 6, wobei die Mittel (37) zur elektrischen Verbindung und Befestigung Nieten oder Stifte sind, und wobei jede Niete oder jeder Stift jede Säule (7) und vorzugsweise die elektronische Platine (8) vertikal und vorzugsweise vollständig durchquert.

10. Induktionsheizung nach einem der Ansprüche 3 bis 9, umfassend
- mindestens einen Konzentrator (4) für magnetischen Fluss, der unter, vorzugsweise direkt unter, der zweiten Platte (2) angeordnet ist;
- und eine Kühlplatte (3), die aus Metall besteht und die unter, vorzugsweise direkt unter, dem mindestens einen Konzentrator (4) für magnetischen Fluss angeordnet ist und dazu geeignet ist, die von dem einen oder den mehreren Induktoren (5) erzeugte Wärme abzuführen, wobei die Kühlplatte (3) eine Vielzahl von Löchern (33) aufweist, von denen jedes Loch von einer entsprechenden Säule (7) durchquert wird.

11. Induktionsheizung nach einem der vorhergehenden Ansprüche, wobei jede Windung (15) einer Vielzahl von Windungen jedes Induktors (5) so geformt ist, dass sie vier paarweise parallele geradlinige Erstreckungen (21, 22, 23, 24) und vier gekrümmte Erstreckungen (25, 26, 27, 28) aufweist, wobei zwei aufeinanderfolgende geradlinige Erstreckungen (21, 22, 23, 24) durch eine entsprechende gekrümmte Erstreckung (25, 26, 27, 28) verbunden sind und wobei der Krümmungsradius der gekrümmten Erstreckung (25, 26, 27, 28) vorzugsweise linear von der innersten Windung zur äußersten Windung allmählich zunimmt.

12. Induktionsheizung nach einem der vorhergehenden Ansprüche, wobei die Anschlüsse (31, 32) vorzugsweise vollständig zwischen einer durch die erste Platte (1) definierten Ebene und einer durch die zweite Platte (2) definierten Ebene angeordnet sind; und/oder wobei die Gesamtdicke (H2) zwischen der unteren Fläche des elektronischen Leistungsmoduls (6) und der oberen Fläche der ersten Platte (1) zwischen 14 und 26 mm beträgt.

13. Induktionsheizung nach einem der vorhergehenden Ansprüche, wobei jeder Induktor (5) eine Dicke (t) zwischen 100 und 500 µm, vorzugsweise zwischen 250 und 390 µm, aufweist; und wobei bevorzugt das Verhältnis des Abstands (g) zwischen den aufeinanderfolgenden Windungen (15) jedes Induktors (5) und der Dicke (t) jedes Induktors (5) entweder kleiner als oder gleich 1,5 ist; und wobei bevorzugt die Dicke der ersten Platte (1) weniger als 1000 um und die Dicke der zweiten Platte (2) weniger als 1000 µm beträgt.

14. Kochfeld (100) mit einer Induktionsheizung nach einem der vorhergehenden Ansprüche.

15. Kochfeld (100) nach Anspruch 14, mit einer oberen Fläche (101), die dazu bestimmt ist, eine Abstellfläche für mindestens einen zu erhitzenden Kochtopf zu sein, und einer unteren Fläche, die der oberen Fläche gegenüberliegt, wobei der Abstand zwischen dem Baryzentrum (C) jedes Induktors (5) und der unteren Fläche weniger als 3 mm beträgt.

16. Verfahren zur Herstellung einer Induktionsheizung nach einem der Ansprüche 1 bis 13, wobei das Verfahren mindestens die Schritte umfasst:
- Herstellen einer Sandwich-Struktur, die durch die erste Platte (1), durch die zweite Platte (2) und durch den einen oder die mehreren Induktoren (5) gebildet wird, die in einer gleichen Ebene zwischen der ersten Platte (1) und der zweiten Platte (2) angeordnet sind;
- Anordnen der Sandwichstruktur, um jede Säule (7) des elektronischen Leistungsmoduls (6) mit einem entsprechenden Anschluss (31, 32) des einen oder der mehreren Induktoren (5) auszurichten;
- elektrisches Verbinden jeder Säule (7) mit einem entsprechenden Anschluss (31, 32) und Befestigen der Sandwichstruktur an dem elektronischen Leistungsmodul (6) mit Hilfe der Mittel (37) zur elektrischen Verbindung und Befestigung.

## Revendications

1. Chauffage à induction pour une table de cuisson comprenant :
- une première feuille électriquement isolante (1) ;
- une seconde feuille électriquement isolante (2) ;
- un ou plusieurs inducteurs (5) disposés sur un même plan entre la première feuille (1) et la seconde feuille (2) définissant une structure en sandwich, chaque inducteur (5) comprenant une seule piste de matériau électriquement conducteur définissant une bobine en spirale plate, lesdits un ou plusieurs inducteurs (5) étant pourvus d'au moins deux bornes (31, 32) ;
**caractérisé en ce que** le chauffage à induction comprend
- un module électronique de puissance (6) pourvu d'une pluralité de colonnes électriquement conductrices (7), chaque colonne (7) étant disposée à une borne respective (31, 32) ;
- des moyens de connexion électrique et de fixation électriquement conducteurs (37), insérés dans une colonne respective (7) pour connecter électriquement chaque colonne (7) à une borne respective (31, 32) et pour fixer ladite structure en sandwich, formée par lesdits un ou plusieurs inducteurs (5) disposés sur ledit même plan entre la première feuille (1) et la seconde feuille (2), audit module électronique de puissance (6) ;
**en ce que** la seconde feuille (2), qui est proximale au module électronique de puissance (6), a une pluralité de trous, chaque trou étant coaxial avec une colonne respective (7) ;
**en ce que** chaque trou est traversé par un moyen de connexion électrique et de fixation respectif (37) ;
et **en ce que** chacun des moyens de connexion électrique et de fixation (37) est en contact avec une borne respective (31, 32).

2. Chauffage à induction selon la revendication 1, dans lequel chaque inducteur (5) est muni de deux bornes (31, 32) ; ou dans lequel, lorsque plusieurs inducteurs (5) sont prévus, lesdits inducteurs (5) sont connectés les uns aux autres et dans lequel il n'y a que deux bornes en commun pour tous les inducteurs (5) ; ou dans lequel, si plusieurs inducteurs (5) sont prévus, lesdits inducteurs (5) sont connectés les uns aux autres, chaque inducteur (5) a une borne respective et une borne est prévue en commun pour tous les inducteurs (5).

3. Chauffage à induction selon la revendication 1 ou 2, dans lequel le module électronique de puissance (6) comprend une carte électronique (8), et dans lequel lesdites colonnes (7) s'étendent verticalement depuis la carte électronique (8) vers les inducteurs (5).

4. Chauffage à induction selon la revendication 3, dans lequel chaque colonne (7) a une hauteur comprise entre 10 mm et 20 mm.

5. Chauffage à induction selon l'une quelconque des revendications précédentes, dans lequel chaque colonne (7) a un bord supérieur en contact avec la surface inférieure d'une borne respective (31, 32) ou avec la surface inférieure de la seconde feuille (2).

6. Chauffage à induction selon l'une quelconque des revendications précédentes, dans lequel la première feuille (1), a une pluralité de trous, chaque trou étant coaxial à une colonne respective (7), et dans lequel chaque trou est traversé par un moyen de connexion électrique et de fixation respectif (37) ; et/ou dans lequel chacun des moyens de connexion électrique et de fixation (37) est en contact avec une surface supérieure ou une surface inférieure d'une borne respective (31, 32).

7. Chauffage à induction selon l'une quelconque des revendications précédentes, dans lequel lesdits moyens de connexion électrique et de fixation comprennent des vis, et dans lequel chaque vis est vissée dans un logement respectif (17) prévu à l'intérieur de chaque colonne (7).

8. Chauffage à induction selon la revendication 7, dans lequel chaque vis a une tête en contact avec la surface supérieure d'une borne respective (31, 32).

9. Chauffage à induction selon l'une quelconque des revendications 1 à 6, dans lequel lesdits moyens de connexion électrique et de fixation (37) sont des rivets ou des goupilles, et dans lequel chaque rivet ou chaque goupille traverse verticalement, et de préférence complètement, chaque colonne (7) et de préférence la carte électronique (8).

10. Chauffage à induction selon l'une quelconque des revendications 3 à 9, comprenant
- au moins un concentrateur de flux magnétique (4) disposé sous, de préférence directement sous, la seconde feuille (2) ;
- et une plaque de dissipation de chaleur (3), faite de métal, disposée sous, de préférence directement sous, l'au moins un concentrateur de flux magnétique (4), conçue pour dissiper la chaleur produite par le ou les inducteurs (5), dans lequel ladite plaque de dissipation de chaleur (3) a une pluralité de trous (33), chaque trou étant traversé par une colonne respective (7).

11. Chauffage à induction selon l'une quelconque des revendications précédentes, dans lequel chaque spire (15) d'une pluralité de spires de chaque inducteur (5) est formée de manière à avoir quatre tronçons rectilignes (21, 22, 23, 24) parallèles par paires, et quatre tronçons courbes (25, 26, 27, 28), dans lequel deux tronçons rectilignes mutuellement successifs (21, 22, 23, 24) sont reliés par un tronçon courbe respectif (25, 26, 27, 28) et, de préférence, dans lequel le rayon de courbure du tronçon courbe (25, 26, 27, 28) augmente progressivement, de préférence linéairement, de la spire la plus intérieure à la spire la plus extérieure.

12. Chauffage à induction selon l'une quelconque des revendications précédentes, dans lequel lesdites bornes (31, 32) sont disposées, de préférence complètement, entre un plan défini par la première feuille (1) et un plan défini par la seconde feuille (2) ; et/ou dans lequel l'épaisseur totale (H2) comprise entre la surface inférieure du module électronique de puissance (6) et la surface supérieure de la première feuille (1) est comprise entre 14 mm et 26 mm.

13. Chauffage à induction selon l'une quelconque des revendications précédentes, dans lequel chaque inducteur (5) a une épaisseur (t) comprise entre 100 µm et 500 µm, de préférence entre 250 µm et 390 µm ; et de préférence dans lequel le rapport de la distance (g) entre les spires consécutives (15) de chaque inducteur (5) et l'épaisseur (t) de chaque inducteur (5) est inférieur ou égal à 1,5 ; et de préférence dans lequel l'épaisseur de la première feuille (1) est inférieure à 1000 µm et l'épaisseur de la seconde feuille (2) est inférieure à 1000 µm.

14. Table de cuisson (100) comprenant un chauffage à induction selon l'une quelconque des revendications précédentes.

15. Table de cuisson (100) selon la revendication 14, ayant une surface supérieure (101) destinée à être une surface de repos pour chauffer au moins une casserole, et une surface inférieure opposée à la surface supérieure, dans laquelle la distance entre le barycentre (C) de chaque inducteur (5) et ladite surface inférieure est inférieure à 3 mm.

16. Procédé de fabrication d'un chauffage à induction selon l'une quelconque des revendications 1 à 13, le procédé comprenant au moins les étapes suivantes :
- la préparation d'une structure en sandwich formée par la première feuille (1), par la seconde feuille (2) et par le ou les inducteurs (5) disposés sur un même plan entre la première feuille (1) et la seconde feuille (2) ;
- l'agencement de la structure en sandwich de manière à aligner chaque colonne (7) du module électronique de puissance (6) avec une borne respective (31, 32) desdits un ou plusieurs inducteurs (5) ;
- la connexion électrique de chaque colonne (7) à une borne respective (31, 32) et la fixation de ladite structure en sandwich audit module électronique de puissance (6) au moyen desdits moyens de connexion électrique et de fixation (37).
